# EUROPÄISCHE PATENTANMELDUNG

(11) **EP 4 091 831 A1**
(43) Veröffentlichungstag der Anmeldung: **23.11.2022**
(21) Anmeldenummer: 22020212.1
(22) Anmeldetag: 09.05.2022
(51) Int. Cl.: B42D 25/382, B42D 25/387, B42D 25/351, B42D 25/29, B41M 3/14, C09D 11/037

(54) **SICHERHEITSELEMENT MIT LUMINESZENZMERKMAL UND DATENTRÄGER MIT EINEM SOLCHEN SICHERHEITSELEMENT**

(30) Priorität: 11.05.2021 DE 102021002495
(71) Anmelder: Giesecke+Devrient Currency Technology GmbH, 81677 München (DE)
(72) Erfinder: Schiffmann, Peter, 81673 München (DE); Mengel, Christoph, 83607 Holzkirchen (DE); Kisselova-Weckerle, Yana, 85521 Ottobrun (DE); Lesch, Harald, 85646 Anzing (DE); Pfeiffer, Matthias, 81675 München (DE)
(74) Vertreter: Giesecke + Devrient IP

(57) **Zusammenfassung**

Die Erfindung betrifft ein Sicherheitselement (30) zur Absicherung von Wertgegenständen mit einem Merkmalsbereich (38) mit einem Lumineszenzmerkmal. Der Merkmalsbereich (38) weist zumindest drei Motivbereiche (52, 54, 56) auf, die im sichtbaren Spektralbereich in Aufsicht dieselbe sichtbare Farbe zeigen, und von denen bei Anregung des Merkmalsbereichs (38) mit UV- und/oder IR-Anregungslicht in Aufsicht ein erster Motivbereich (52) in einer ersten Lumineszenzfarbe luminesziert, ein zweiter Motivbereich (54) in einer zweiten, unterschiedlichen Lumineszenzfarbe luminesziert, und ein dritter Motivbereich (56) keine Lumineszenzemission zeigt. Der Merkmalsbereich (38) enthält einen ersten Druckbereich (32) mit der genannten sichtbaren Farbe und mit zumindest einem Lumineszenzstoff für die erste Lumineszenzfarbe, und einen zweiten Druckbereich (34) mit der genannten sichtbaren Farbe und zumindest einem Lumineszenzstoff für die zweite Lumineszenzfarbe. Weiter ist im Merkmalsbereich (38) in einem den ersten und/oder zweiten Druckbereich überlappenden Überdeckungsbereich (36) eine Blocker-Druckfarbe (46) aufgebracht, die im sichtbaren Spektralbereich nicht sichtbar ist und das UV- und/oder IR-Anregungslicht blockiert, wobei der nicht von der Blocker-Druckfarbe (46) überdeckte Teilbereich des ersten Druckbereichs den ersten Motivbereich (52) mit der ersten Lumineszenzfarbe, der nicht von der Blocker-Druckfarbe (46) überdeckte Teilbereich des zweiten Druckbereichs den zweiten Motivbereich (54) mit der zweiten Lumineszenzfarbe, und der Überdeckungsbereich (36) den dritten Motivbereich (56) ohne Lumineszenzemission umfasst.

## Beschreibung

Die Erfindung betrifft ein Sicherheitselement zur Absicherung von Wertgegenständen, das einen Merkmalsbereich mit einem Lumineszenzmerkmal aufweist. Die Erfindung betrifft auch einen Datenträger mit einem solchen Sicherheitselement.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. In diesem Zusammenhang ist es bekannt, Lumineszenzstoffe zur Absicherung von Wert- oder Ausweisdokumenten einzusetzen. Das Vorliegen der Lumineszenzstoffe kann dann beispielsweise mit Hilfe einer UV-Lampe geprüft werden.

Davon ausgehend liegt der Erfindung die Aufgabe zugrunde, ein Sicherheitselement der eingangs genannten Art mit einem attraktiven Erscheinungsbild und hoher Fälschungssicherheit anzugeben.

Diese Aufgabe wird durch die Merkmale der unabhängigen Ansprüche gelöst. Weiterbildungen der Erfindung sind Gegenstand der abhängigen Ansprüche.

Gemäß der Erfindung enthält ein gattungsgemäßes Sicherheitselement zur Absicherung von Wertgegenständen einen Merkmalsbereich mit einem Lumineszenzmerkmal. Der Merkmalsbereich weist zumindest drei Motivbereiche auf, die im sichtbaren Spektralbereich in Aufsicht dieselbe sichtbare Farbe zeigen, und von denen bei Anregung des Merkmalsbereichs mit UV- und/oder IR-Anregungslicht in Aufsicht ein erster Motivbereich in einer ersten Lumineszenzfarbe luminesziert, ein zweiter Motivbereich in einer zweiten, unterschiedlichen Lumineszenzfarbe luminesziert, und ein dritter Motivbereich keine Lumineszenzemission zeigt.

Der Merkmalsbereich enthält dabei einen ersten Druckbereich mit der genannten sichtbaren Farbe und mit zumindest einem Lumineszenzstoff für die erste Lumineszenzfarbe, und einen zweiten Druckbereich mit der genannten sichtbaren Farbe und zumindest einem Lumineszenzstoff für die zweite Lumineszenzfarbe.

Weiter ist im Merkmalsbereich in einem den ersten und/oder zweiten Druckbereich überlappenden Überdeckungsbereich eine Blocker-Druckfarbe aufgebracht, die im sichtbaren Spektralbereich nicht sichtbar ist und das UV- und/oder IR-Anregungslicht blockiert. Der nicht von der Blocker-Druckfarbe überdeckte Teilbereich des ersten Druckbereichs umfasst den ersten Motivbereich mit der ersten Lumineszenzfarbe, der nicht von der Blocker-Druckfarbe überdeckte Teilbereich des zweiten Druckbereichs den zweiten Motivbereich mit der zweiten Lumineszenzfarbe, und der Überdeckungsbereich den dritten Motivbereich ohne Lumineszenzemission.

In einer vorteilhaften Ausgestaltung ist der erste Druckbereich durch eine erste Druckfarbe mit der genannten sichtbaren Farbe und mit zumindest einem Lumineszenzstoff für die erste Lumineszenzfarbe gebildet, und der zweite Druckbereich ist durch eine zweite Druckfarbe mit der genannten sichtbaren Farbe und mit zumindest einem Lumineszenzstoff für die zweite Lumineszenzfarbe gebildet.

Bevorzugt überlappen dabei die erste und zweite Druckfarbe in einem Teilbereich und bilden dort einen weiteren Motivbereich, der bei Anregung des Merkmalsbereichs mit UV- und/oder IR-Anregungslicht in einer Lumineszenzfarbe luminesziert, die durch Farbmischung der ersten und zweiten Lumineszenzfarbe erzeugt ist.

Bei einer anderen, ebenfalls vorteilhaften Ausgestaltung ist vorgesehen, dass der erste Druckbereich durch die erste Druckfarbe mit der genannten sichtbaren Farbe und mit zumindest einem langwellig UV-anregbaren Lumineszenzstoff gebildet ist, und dass der zweite Druckbereich durch die zweite Druckfarbe gebildet ist, die eine deckende Farbe enthält, die im sichtbaren Spektralbereich denselben Farbton wie die sichtbare Farbe des ersten Druckbereichs aufweist und die einen von dem Lumineszenzstoff des ersten Druckbereichs unterschiedlichen Lumineszenzstoff enthält. In einem Überlappungsbereich der ersten und zweiten Druckfarbe deckt die deckende Farbe der zweiten Druckfarbe die sichtbare Farbe der ersten Druckfarbe zumindest teilweise ab. Dabei enthält die deckende Farbe der zweiten Druckfarbe ein Titandioxid der Modifikation Anatas oder besteht aus dieser Modifikation und absorbiert dadurch im langwelligen UV-Bereich nicht und erlaubt so eine UV-Anregung der ersten Druckfarbe im ersten Druckbereich.

Nach einer anderen, ebenfalls vorteilhaften Ausgestaltung ist zumindest ein Druckbereich durch eine Druckfarbe mit der genannten sichtbaren Farbe und einem ersten Lumineszenzstoff, sowie eine transparente Druckfarbe mit einem zweiten Lumineszenzstoff gebildet, wobei der erste und zweite Lumineszenzstoff durch Farbmischung, insbesondere additive Farbmischung, die Lumineszenzfarbe des Druckbereichs erzeugen. Die transparente Farbe ist vorzugsweise über die Druckfarbe mit der genannten sichtbaren Farbe gedruckt.

Bei einer weiteren vorteilhaften Ausgestaltung enthalten der erste und zweite Druckbereich eine gemeinsame Grunddruckfarbe mit der genannten sichtbaren Farbe und einem ersten Lumineszenzstoff für die erste Lumineszenzfarbe. Der zweite Druckbereich enthält zusätzlich eine transparente Druckfarbe mit einem zweiten Lumineszenzstoff, der zusammen mit dem ersten Lumineszenzstoff durch Farbmischung, insbesondere additive Farbmischung, die zweite Lumineszenzfarbe erzeugt, während der erste Druckbereich keine solche zusätzliche transparente Druckfarbe aufweist. Die zusätzliche transparente Farbe ist vorzugsweise über die Grunddruckfarbe gedruckt.

Eine solche Ausgestaltung bietet mehrere Vorteile: Insbesondere bleibt der visuelle Farbeindruck im sichtbaren Spektralbereich auch bei eventuellen Farbführungsschwankungen beim Aufdrucken der zusätzlichen transparenten Druckfarbe unverändert. Auch kann grundsätzlich keine Lücke zwischen dem ersten und zweiten Druckbereich entstehen, da beide Druckbereiche die Grunddruckfarbe gemeinsam haben. Bei Betrachtung im UV-Licht fallen eventuelle Farbführungsschwankungen zwischen der Grunddruckfarbe und der zusätzlichen transparenten Druckfarbe aufgrund der Verschiedenfarbigkeit des ersten und zweiten Druckbereichs kaum auf. Auch die Streuung der UV-Strahlung bei der Anregung trägt dazu bei, dass eventuelle Passerschwankungen beim Aufbringen der lumineszierenden Druckfarben visuell kaum auffallen.

Der erste und/oder zweite Druckbereich sind vorzugsweise in Motivform, insbesondere als Zeichen, Muster oder Codierungen ausgebildet. Mit besonderem Vorteil stellen der erste und zweite Druckbereich aufeinander bezogene oder einander ergänzende Informationen dar. Die Informationen der beiden Druckbereiche erscheinen dann im sichtbaren Spektralbereich mit gleicher Farbe und bilden als eine einheitliche, einfarbige Gesamtinformation. Erst bei UV-Beleuchtung treten die unterschiedlichen Lumineszenzfarben der beiden Druckbereiche hervor und lassen erkennen, dass die Gesamtinformation aus zwei unterschiedlichen Teilbereichen zusammengesetzt ist. Der erste und zweite Druckbereich können beispielsweise jeweils Teile einer Wertzahl oder eines alphanumerischen Schriftzugs bilden.

Mit Vorteil sind der erste und zweite Druckbereich registriert zueinander angeordnet, insbesondere können die Druckbereiche zumindest in Teilbereichen ohne Zwischenraum unmittelbar aneinander angrenzend angeordnet sein. In manchen, ebenfalls vorteilhaften Gestaltungen ist allerdings vorgesehen, dass der erste und zweite Druckbereich beabstandet angeordnet sind und eigenständige Motivteile bilden.

Das Sicherheitselement ist in einer vorteilhaften Ausgestaltung auf Betrachtung von gegenüberliegenden Seiten her ausgelegt und weist neben dem Überdeckungsbereich, der das UV- und/oder IR-Anregungslicht bei Einfall von einer ersten Seite blockiert, zusätzlich einen den ersten und/oder zweiten Druckbereich überlappenden Bedeckbereich auf, der das UV- und/oder IR-Anregungslicht bei Einfall von einer gegenüberliegenden zweiten Seite blockiert.

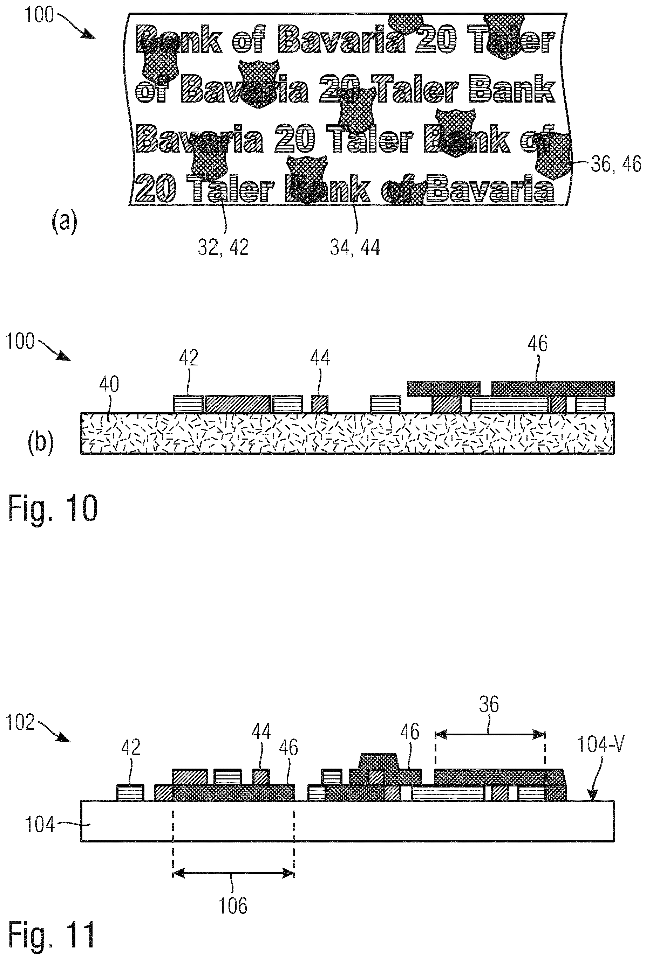

Die Begriffe Überdeckungsbereich und Bedeckbereich beziehen sich in der vorliegenden Beschreibung entsprechend ihrer Lage als zumindest teilweise überdeckende Bereiche bzw. zumindest teilweise bedeckte Bereiche jeweils auf eine ausgewählte Betrachtungsrichtung. Der strukturelle Aufbau des Sicherheitselements kann vollständig unter Bezug auf eine solche ausgewählte Betrachtungsrichtung beschrieben werden, selbst wenn das Sicherheitselement von zwei gegenüberliegenden Seiten her betrachtet werden kann. Stellt man nämlich auf die Betrachtung von der gegenüberliegenden Seite her ab, so tauschen die Überdeckungsbereiche und Bedeckbereiche bei unverändertem strukturellem Aufbau lediglich ihre Bezeichnung, wie weiter unten im Zusammenhang mit der Beschreibung der Figuren 11 bis 16 genauer erläutert.

Der Überdeckungsbereich und der Bedeckbereich sind vorteilhaft mit unterschiedlicher Form und/oder Größe ausgebildet, so dass das Sicherheitselement bei Betrachtung von gegenüberliegenden Seiten unterschiedliche Erscheinungsbilder aufweist. Der Überdeckungsbereich und/oder der Bedeckbereich sind mit Vorteil in Motivform, insbesondere als Zeichen, Muster oder Codierungen ausgebildet.

Der erste und zweite Druckbereich sind vorzugsweise zwischen dem Überdeckungsbereich und dem Bedeckbereich angeordnet. Da die verschiedenen Bereiche in unterschiedlicher Form und Größe ausgebildet sein können, bedeutet dies insbesondere, dass - bezogen auf eine ausgewählte Betrachtungsrichtung - der Überdeckungsbereich den ersten und zweiten Druckbereich teilweise überdeckt und der erste und zweite Druckbereich den Bedeckbereich teilweise überdecken, dass aber der erste oder zweite Druckbereich nirgends den Überdeckungsbereich überdeckt und der Bedeckbereich nirgends den ersten oder zweiten Druckbereich überdeckt.

In einer vorteilhaften Gestaltung ist der Bedeckbereich zumindest mit einem Teilbereich unterhalb von seitenkritischen Motivbestandteilen des ersten und/oder zweiten Druckbereichs angeordnet. Bei Betrachtung von der gegenüberliegenden Seite blockiert der Bedeckbereich dann eine UV- und/oder IR-Anregung der seitenkritischen Motivbestandteile, so dass diese nicht zur Lumineszenz beitragen. Als seitenunkritisch werden Motivbestandteile bezeichnet, deren Gestalt bei Betrachtung von Vorder- und Rückseite, im Ergebnis also bei einer Spiegelung, im Wesentlichen unverändert ist. Beispiele seitenunkritischer Motivbestandteile sind die Ziffer 0 oder die Buchstaben A, O, T, W, H, M und X. Als seitenkritisch werden Motivbestandteile bezeichnet, die bei Betrachtung von der Rückseite aufgrund der Spiegelung nicht seitenrichtig erscheinen und beiden denen die Seitenrichtigkeit für den Informationsgehalt des Motivs von Bedeutung ist. Beispiele seitenkritischer Motivbestandteile sind die Ziffern 1 bis 9 oder die anderen als die oben genannten Buchstaben.

In einer vorteilhaften Gestaltung weist das Sicherheitselement ein Substrat auf, das zumindest in einem Teilbereich des Merkmalsbereichs im sichtbaren Spektralbereich transparent oder transluzent ist. Mit Vorteil ist das Substrat auch zumindest in einem Teilbereich für das UV- und/oder IR-Anregungslicht des Merkmalsbereichs transparent. Das Substrat kann auch nur für einen Teil des Anregungswellenlängenbereichs, beispielsweise für längerwellige UV-Strahlung (beispielsweise ab 300 nm) transparent sein, kürzerwellige UV-Strahlung aber blockieren. Bildet das Sicherheitselement einen integralen Bestandteil eines Wertdokuments oder anderen Datenträgers, so kann das genannte Substrat auch das Substrat eines Wertdokuments oder anderen Datenträgers sein.

Der erste und zweite Druckbereich, der Überdeckungsbereich und der Bedeckbereich können auf derselben Seite des Substrats angeordnet sein. In einer vorteilhaften Ausgestaltung sind der Überdeckungsbereich und der Bedeckbereich auf gegenüberliegenden Seiten des Substrats angeordnet. Auch ein Teil des ersten und/oder zweiten Druckbereichs kann jeweils auf gegenüberliegenden Seiten des Substrats angeordnet sein. Grundsätzlich ist jede Verteilung der beiden Druckbereiche, des Überdeckungsbereichs und des Bedeckbereichs auf die beiden gegenüberliegenden Substratseiten möglich, die die oben genannten Anforderungen an den Überdeckungsbereich und den Bedeckbereich erfüllt.

Die Blocker-Druckfarbe enthält für UV-Anregungsstrahlung vorzugsweise einen nanoskaligen UV-Blocker auf Basis von Titandioxid der Modifikation Rutil oder Tinuvin 400 und blockiert UV-Strahlung im kurz- und langwelligen UV-Bereich. Alternativ oder zusätzlich kann die Blocker-Druckfarbe einen nanoskaligen UV-Blocker auf Basis von Titandioxid der Modifikation Anatas enthalten und UV-Strahlung im Wesentlichen nur im kurzwelligen UV-Bereich blockieren. Für IR-Anregungsstrahlung enthält die Blocker-Druckfarbe insbesondere einen Infrarotabsorber, insbesondere einen NIR-Absorber, um eine Anregung von IR-anregbaren Lumineszenzstoffen zu blockieren.

Das Sicherheitselement ist mit Vorteil ein Druckelement, ein Sicherheitsfaden, wie ein Fenstersicherheitsfaden oder Pendelsicherheitsfaden, ein Sicherheitsband, ein Sicherheitsstreifen, ein Patch oder ein Etikett zum Aufbringen auf ein Sicherheitspapier, Wertdokument oder dergleichen. Das Sicherheitselement kann dabei eine Trägerfolie enthalten oder auch als Druckelement ohne Trägerfolie vorliegen.

Das Sicherheitselement kann ein separates Sicherheitselement, beispielsweise ein Druckelement oder ein Folienelement darstellen, das in einem opaken oder transparenten Bereich eines Datenträgers angeordnet werden kann. Das Sicherheitselement kann auch einen integralen Bestandteil eines Datenträgers, beispielsweise eines Wertdokuments selbst darstellen und kann in diesem Fall beispielsweise einen transparenten Teilbereich des Datenträgers umfassen, auf dessen gegenüberliegenden Hauptflächen verschiedene Druckbereiche des Sicherheitselements angeordnet sind.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, ein Sigel, eine Steuerbanderole, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: in (a) und (b) eine schematische Darstellung zweier Banknoten jeweils mit mehreren Sicherheitsmerkmalen und einem erfindungsgemäßen Lumineszenz-Druckelement,
- Fig. 2: ein Sicherheitselement nach einem Ausführungsbeispiel der Erfindung, wobei (c) schematisch den Aufbau des Sicherheitselements im Querschnitt und (a) und (b) das zugehörige Erscheinungsbild im sichtbaren Licht bzw. im UV-Licht zeigen,
- Fig. 3: schematisch ein Sicherheitselement nach einem weiteren Ausführungsbeispiel der Erfindung im Querschnitt,
- Fig. 4: eine Abwandlung der Gestaltung der Fig. 3, bei der das Sicherheitselement auf einem Substrat mit einem transparenten Fensterbereich aufgebracht ist,
- Fig. 5: ein Sicherheitselement nach einem anderen Ausführungsbeispiel der Erfindung mit seitenkritischen und seitenunkritischen Motivbestandteilen,
- Fig. 6: eine Weiterbildung des Sicherheitselements der Fig. 5, wobei (a) einen Querschnitt des Sicherheitselements und (b) eine vereinfachte Aufsicht im Fensterbereich zeigt,
- Fig. 7: ein Sicherheitselement nach einem weiteren Ausführungsbeispiel der Erfindung mit einer zweiten, unterschiedlichen Blocker-Druckfarbe,
- Fig. 8: eine Abwandlung des Sicherheitselements der Fig. 3, wobei (a) einen Querschnitt des Sicherheitselements und (b) das Erscheinungsbild des Sicherheitselements in Aufsicht bei Betrachtung im UV-Licht zeigt,
- Fig. 9: eine weitere Abwandlung der Gestaltung der Fig. 3 mit unterschiedlich anregbaren Lumineszenzstoffen und unterschiedlichen Blocker-Druckfarben,
- Fig. 10: in (a) schematisch eine Aufsicht und in (b) einen Querschnitt eines Sicherheitselements nach einem weiteren Ausführungsbeispiel der Erfindung,
- Fig. 11: schematisch im Querschnitt ein Sicherheitselement nach einem weiteren Ausführungsbeispiel der Erfindung mit einem Überdeckungsbereich und einem Bedeckbereich,
- Fig. 12: eine Abwandlung des Sicherheitselements der Fig. 11,
- Fig. 13: ein Sicherheitselement nach einem weiteren Ausführungsbeispiel der Erfindung mit einem weiteren Motivbereich,
- Fig. 14, 15: Abwandlungen des Sicherheitselements der Fig. 13, die neben einem Überdeckungsbereich auch einen Bedeckbereich aufweisen,
- Fig. 16: ein Sicherheitselement nach einem weiteren Ausführungsbeispiel der Erfindung, und
- Fig. 17: das Erscheinungsbild eines von gegenüberliegenden Seiten her betrachtbaren Sicherheitselements mit Überdeckungsbereich und Bedeckbereich, wobei (a) das Erscheinungsbild im sichtbaren Licht bei Vorderseitenbetrachtung, (b) das Erscheinungsbild im sichtbaren Licht bei Rückseitenbetrachtung, (c) das Erscheinungsbild unter UV-Licht bei Vorderseitenbetrachtung und (d) das Erscheinungsbild unter UV-Licht bei Rückseitenbetrachtung zeigt.

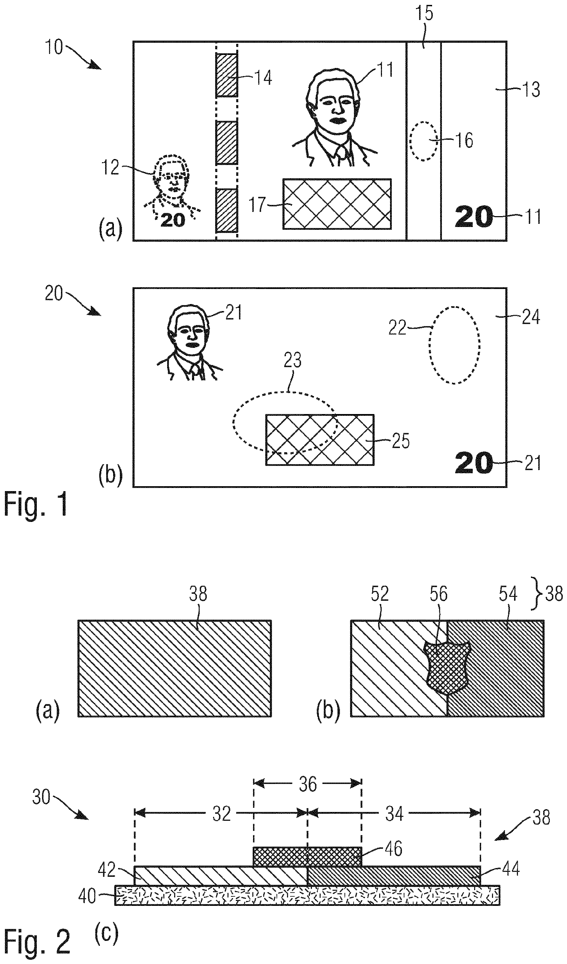

Die Erfindung wird nun am Beispiel von Sicherheitselementen für Banknoten erläutert. Figur 1 zeigt dazu in schematischer Darstellung zwei Banknoten mit mehreren Sicherheitsmerkmalen, bei denen erfindungsgemäße Sicherheitselemente mit Vorteil zum Einsatz kommen können.

Figur 1(a) zeigt eine Papierbanknote 10 mit zwei Druckelementen 11, einem Wasserzeichen 12, einem teilweise in das Banknotenpapier 13 eingebetteten Fenstersicherheitsfaden 14, einem Folienstreifen 15, der eine durchgehende Öffnung 16 im Banknotenpapier verschließt, sowie einem erfindungsgemäß ausgebildeten Lumineszenz-Druckelement 17. Figur 1(b) zeigt eine Polymerbanknote 20 mit zwei Druckelementen 21 und mit zwei Fensterbereichen 22, 23, die durch transparente Bereiche in einem ansonsten durch eine Farbannahmeschicht opaken gemachten Polymersubstrats 24 gebildet sind. Ein erfindungsgemäßes Lumineszenz-Druckelement 25 ist so aufgebracht, dass es teilweise auf der opaken Farbannahmeschicht und teilweise über dem Fensterbereich 23 liegt, so dass das Druckelement 25 dort auch von der Rückseite der Banknote 20 her betrachtet werden kann.

Das Erscheinungsbild und der Aufbau erfindungsgemäßer Sicherheitselemente, wie etwa der Lumineszenz-Druckelemente 17, 25 der Fig. 1 wird nun mit Bezug auf die nachfolgenden Figuren näher erläutert.

Figur 2 zeigt ein zur Erläuterung des Grundprinzips der Erfindung ein Sicherheitselement 30 nach einem ersten Ausführungsbeispiel, wobei Fig. 2(c) schematisch den Aufbau des Sicherheitselements im Querschnitt zeigt und die Figuren 2(a) und (b) das zugehörige Erscheinungsbild des Sicherheitselements bei Betrachtung im sichtbaren Licht bzw. im UV-Licht im Auflicht illustrieren.

Das Sicherheitselement 30 ist ein Druck-Sicherheitselement, das auf ein Substrat 40, beispielsweise das Banknotenpapier der Banknote 10 oder das Polymersubstrat der Banknote 20 aufgedruckt ist. In anderen Gestaltungen kann das Sicherheitselement 30 auch auf einer Trägerfolie vorliegen und zusammen mit der Trägerfolie auf ein Zielsubstrat aufgebracht, beispielsweise aufgeklebt sein. Das Sicherheitselement kann auch durch einen Bereich eines Substrats 40 zusammen mit den aufgebrachten Schichten gebildet sein. Das Substrat ist insbesondere dann Bestandteil des Sicherheitselements, wenn auf den gegenüberliegenden Seiten des Substrats aufgebrachten Schichten des Sicherheitselements vorliegen.

Das Sicherheitselement 30 enthält einen Merkmalsbereich 38, der aus zwei Druckbereichen 32, 34 und einem Überdeckungsbereich 36 gebildet ist. In dem ersten Druckbereich 32 ist eine erste Druckfarbe 42 aufgebracht, die eine bestimmte sichtbare Farbe, beispielsweise Rot, aufweist. Zudem enthält die erste Druckfarbe 42 einen ersten UV-Lumineszenzstoff für eine erste Lumineszenzfarbe, beispielsweise Grün. In dem zweiten, im Ausführungsbeispiel unmittelbar an den ersten Druckbereich anschließenden Druckbereich 34, ist eine zweite Druckfarbe 44 aufgebracht, die ebenfalls die genannte sichtbare Farbe, beispielsweise Rot, aufweist und die zudem einen zweiten UV-Lumineszenzstoff für eine zweite, unterschiedliche Lumineszenzfarbe, beispielsweise Blau, enthält. Die beiden UV-Lumineszenzstoffe lumineszieren nach Anregung mit UV-Strahlung in der ersten bzw. zweiten Lumineszenzfarbe, vorliegend Grün bzw. Blau.

In einem Überdeckungsbereich 36, der sowohl den ersten als auch den zweiten Druckbereich 32, 34 überlappt, ist über den Druckfarben 42, 44 eine Blocker-Druckfarbe 46 aufgebracht, die im sichtbaren Spektralbereich transparent ist, und die einen UV-Blocker enthält, der die UV-Anregungsstrahlung für die Lumineszenzstoffe blockiert. Die Blocker-Druckfarbe 46 kann beispielsweise in einem transparenten Bindemittel einen nanoskaligen UV-Blocker auf Basis von Titandioxid der Modifikation Rutil oder Tinuvin 400 enthalten.

Da die beiden Druckfarben 42, 44 im sichtbaren Spektralbereich dieselbe sichtbare Farbe aufweisen und die Blocker-Druckfarbe 46 im sichtbaren Spektralbereich transparent ist, zeigen der erste Druckbereich 32 und der zweite Druckbereich 34 einschließlich des Überdeckungsbereichs 36 eine einheitliche Farbe, vorliegend Rot. Der gesamte Merkmalsbereich 38 des Sicherheitselements erscheint daher im sichtbaren Licht als homogene, einfarbige Fläche, wie in Fig. 2(a) illustriert.

Bei Betrachtung des Sicherheitselements 30 unter UV-Licht werden die UV-Lumineszenzstoffe der Druckfarben 42, 44 zur Lumineszenz angeregt, allerdings nur in den nicht von der UV-blockierenden Blocker-Druckfarbe 46 überdeckten Bereichen. Im Ausführungsbeispiel ist der Überdeckungsbereich 36 zur Illustration in Form eines Wappens ausgebildet, der Merkmalsbereich 38 zeigt im UV-Licht somit das in Fig. 2(b) illustrierte Erscheinungsbild, bei dem der außerhalb des Wappens 36 liegende Motivbereich 52 des ersten Druckbereichs grün luminesziert, der außerhalb des Wappens 36 liegende Motivbereich 54 des zweiten Druckbereichs blau luminesziert, und der Wappenbereich 36 einen dunklen Motivbereich 56 bildet, der wegen der blockierten UV-Anregung keine Lumineszenzemission zeigt.

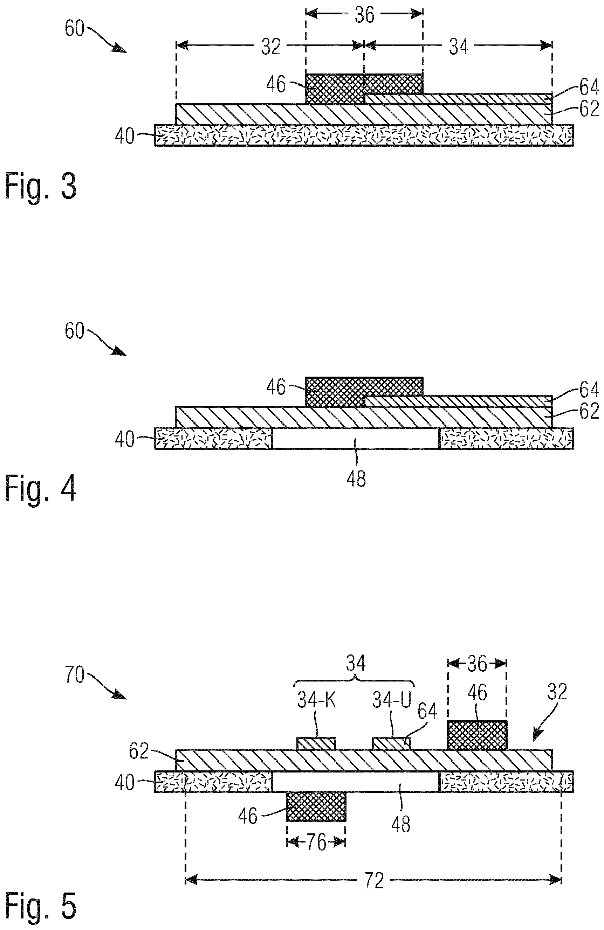

Figur 3 zeigt schematisch ein Sicherheitselement 60 nach einem weiteren Ausführungsbeispiel der Erfindung im Querschnitt, das eine vorteilhafte Abwandlung der Ausgestaltung der Fig. 2 darstellt. Bei der Gestaltung der Fig. 3 ist im gesamten Merkmalsbereich 38 zunächst eine erste Grunddruckfarbe 62 aufgebracht, welche die eine bestimmte sichtbare Farbe, beispielsweise Rot, aufweist, und zudem einen ersten UV-Lumineszenzstoff für die erste Lumineszenzfarbe, beispielsweise Grün, enthält.

In einem Teilbereich des Merkmalsbereichs 38 ist die erste Grunddruckfarbe 62 mit einer zweiten Druckfarbe 64 überdruckt, die im sichtbaren Spektralbereich transparent ist und einen zweiten Lumineszenzstoff für eine weitere Lumineszenzfarbe enthält, welche durch additive Farbmischung mit der ersten Lumineszenzfarbe die gewünschte zweite Lumineszenzfarbe ergibt. Beispielsweise kann die zweite Druckfarbe 64 einen Lumineszenzstoff für rote Lumineszenz enthalten, so dass sich nach UV-Anregung durch additive Farbmischung der grünen Lumineszenz der Grunddruckfarbe 62 und der roten Lumineszenz der Druckfarbe 64 eine gewünschte gelbe Lumineszenzfarbe ergibt.

Der von der zweiten Druckfarbe 64 überdruckte Teilbereich der Grunddruckfarbe bildet den zweiten Druckbereich 34, der nicht von der zweiten Druckfarbe 64 überdruckte Teilbereich den ersten Druckbereich 32.

In einem Überdeckungsbereich 36, der sowohl den ersten als auch den zweiten Druckbereich 32, 34 überlappt, ist wie bei der Gestaltung der Fig. 2 eine Blocker-Druckfarbe 46 über den Druckfarben 62, 64 aufgebracht, die im sichtbaren Spektralbereich transparent ist, und mit einem UV-Blocker versehen ist, der die UV-Anregungsstrahlung für die Lumineszenzstoffe blockiert.

Im sichtbaren Spektralbereich zeigt die erste Grunddruckfarbe 62 die gewünschte sichtbare Farbe, die zweite Druckfarbe 64 und die Blocker-Druckfarbe 46 sind transparent, so dass der erste Druckbereich 32 und der zweite Druckbereich 34 einschließlich des Überdeckungsbereichs 36 mit einheitlicher Farbe, vorliegend Rot, erscheinen. Der gesamte Merkmalsbereich 38 des Sicherheitselements erscheint im sichtbaren Licht daher als homogene, einfarbige Fläche, wie in Fig. 2(a) illustriert.

Bei Betrachtung des Sicherheitselements 60 unter UV-Licht werden die UV-Lumineszenzstoffe der Druckfarben 62, 64 zur Lumineszenz angeregt, allerdings nur in den nicht von der UV-blockierenden Blocker-Druckfarbe 46 überdeckten Bereichen. Der Merkmalsbereich 38 zeigt daher im UV-Licht ein Erscheinungsbild nach Fig. 2(b), bei dem der außerhalb des Überdeckungsbereichs 36 liegende Motivbereich 52 des ersten Druckbereichs 32 grün luminesziert, der außerhalb des Überdeckungsbereichs 36 liegende Motivbereich 54 des zweiten Druckbereichs 34 aufgrund der erläuterten additiven Farbmischung gelb luminesziert, und der Überdeckungsbereich 36 einen dunklen Motivbereich 56 bildet, wegen der blockierten UV-Anregung keine Lumineszenzemission zeigt.

Besondere Vorteile der Ausgestaltung der Fig. 3 bestehen insbesondere darin, dass der rote Farbeindruck im sichtbaren Spektralbereich trotz eventueller Farbführungsschwankungen beim Aufdrucken der Druckfarben 62, 64, 46 unverändert bleibt und die Motivbereiche 52, 54, 56 im sichtbaren Spektralbereich nicht zu unterscheiden sind. Insbesondere kann bei der Ausgestaltung der Fig. 3, anders als bei der Gestaltung der Fig. 2, grundsätzlich keine Lücke zwischen dem ersten und zweiten Druckbereich 32, 34 entstehen. Auch bei Betrachtung im UV-Licht fallen eventuelle Farbführungsschwankungen der Druckbereiche 32, 34 visuell kaum auf, da die beiden Bereiche ohnehin unterschiedliche Lumineszenzfarben aufweisen.

Figur 4 zeigt eine Abwandlung der Gestaltung der Fig. 3, bei der das Sicherheitselement 60 auf einem Substrat 40 mit einem transparenten Fensterbereich 48 aufgebracht ist. Beispielsweise handelt es sich bei dem Substrat um eine an sich transparente Folie, die mit einer im Fensterbereich 48 ausgesparten, opakifizierenden Farbannahmeschicht ausgestattet ist.

Eine solche Anordnung gestattet auch eine Betrachtung des Sicherheitselements 60 von der Rückseite des Substrats 40 her. Im Fensterbereich 48 zeigt das Sicherheitselement im sichtbaren Spektralbereich die sichtbare Farbe der Druckfarbe 62. Ist das Substrat 40 nicht UV-absorbierend ausgebildet, so kann nach UV-Anregung von der Rückseite her auch die grüne Lumineszenz der Druckfarbe 62 und die durch additive Farbmischung entstehende gelbe Lumineszenz im Überlappbereich der Druckfarben 62, 64 beobachten werden. Die auf den Druckfarben 62, 64 aufgebrachte Blocker-Druckfarbe 46 befindet sich bei Rückseitenansicht in Betrachtungsrichtung unterhalb der Druckfarben 62, 64 und hat daher nahezu keinen Einfluss auf das rückseitige Erscheinungsbild.

Die genannten Druckbereiche und Motivbereiche können alle in Motivform, beispielsweise als Zeichen, Muster oder Codierungen ausgebildet sein. Sind die motivförmigen Druck- und Motivbereiche zumindest teilweise über einem Fensterbereich eines Substrats aufgebracht, können mit Vorteil besondere Maßnahmen für sogenannte seitenkritische Motivbestandteile vorgesehen sein. Seitenkritische und seitenunkritische Motivbestandteile sind weiter oben definiert und genauer erläutert.

Das Ausführungsbeispiel der Fig. 5 zeigt ein Sicherheitselement 70, das durch einen Teilbereich 72 des Substrats 40 eines Wertdokuments und die in diesem Teilbereich 72 auf den gegenüberliegenden Seiten des Substrats 40 aufgebrachten Druckschichten gebildet ist. Das Substrat 40 enthält im Teilbereich 72 einen transparenten Fensterbereich 48, so dass das Sicherheitselement 70 sowohl von der Vorderseite als auch der Rückseite des Substrats 40 her betrachtet werden kann.

Der Aufbau des Sicherheitselements 70 stellt eine Abwandlung des Sicherheitselements 60 der Fig. 4 dar, wobei die erste Grunddruckfarbe 62 in einem Teilbereich 34 mit der zweiten Druckfarbe 64 überdruckt ist, welcher seinerseits aus mehreren Teilbereichen mit seitenkritischen Motivbestandteilen 34-K bzw. mit seitenunkritischen Motivbestandteilen 34-U besteht. Die seitenkritischen Motivbestandteile 34-K können beispielsweise das Währungssymbol "€" und die seitenunkritischen Motivbestandteile 34-U das spiegelsymmetrische Wappen der Fig. 2 darstellen. Der Überdeckungsbereich 36 mit der Blocker-Druckfarbe 46 überdeckt im Ausführungsbeispiel der Fig. 5 nur den ersten Druckbereich 32, also einen nicht von der zweiten Druckfarbe 64 überdeckten Bereiche der Grunddruckfarbe 62.

Im Bereich der seitenkritischen Motivbestandteile 34-K ist auf der Rückseite des Substrats 40 ein ebenfalls durch die Blocker-Druckfarbe 46 gebildeter Bedeckbereich 76 vorgesehen, der aus der Vorderseiten-Betrachtungsrichtung unterhalb der Druckfarben 62, 64 liegt und daher von diesen bedeckt wird. Die Begriffe Überdeckungsbereich und Bedeckbereich beziehen sich in der vorliegenden Beschreibung entsprechend ihrer Lage als überdeckende bzw. bedeckte Bereiche jeweils auf eine ausgewählte Betrachtungsrichtung, in dem Ausführungsbeispiel der Fig. 5 konkret auf eine Vorderseitenbetrachtung, also eine Betrachtung von der Vorderseite des Substrats 40, auf der die Druckfarben 62, 64 aufgebracht sind.

Der Bedeckbereich 76 ist nun so auf der Rückseite des Substrats 40 angeordnet, dass er gerade unterhalb der seitenkritischen Motivbestandteile 34-K liegt. Im UV-Licht tritt der Bedeckbereich 76 bei einer Vorderseitenbetrachtung praktisch nicht in Erscheinung, während er bei einer Rückseitenbetrachtung die seitenkritischen Motivbestandteile 34-K überdeckt, so dass diese nicht zur Lumineszenz angeregt werden und somit nur die nicht überdeckten, seitenunkritischen Motivbestandteile 34-U zum Erscheinungsbild beitragen. Die seitenkritischen Motivbestandteile 34-K treten daher nur bei der Vorderseitenbetrachtung in Erscheinung und werden bei Rückseitenbetrachtung ausblendet.

Die Blocker-Druckfarbe 46 des Bedeckbereichs 76 kann grundsätzlich auch auf derselben Substratseite wie die anderen Druckfarben, unterhalb der ersten Druckfarbe 62 vorgesehen sein.

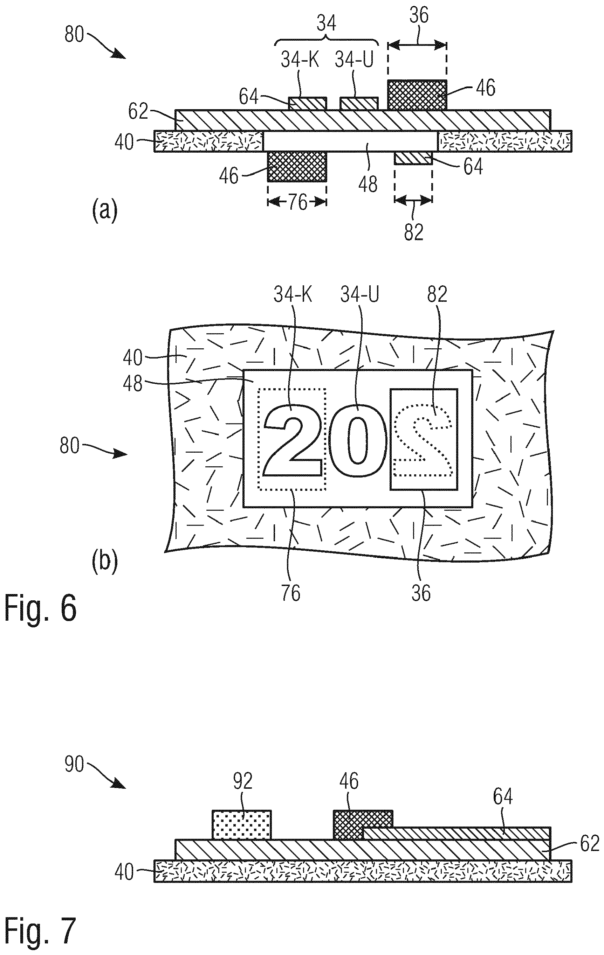

Figur 6 zeigt ein Sicherheitselement 80 nach einem weiteren Ausführungsbeispiel der Erfindung, das eine Weiterbildung des Sicherheitselements 70 der Fig. 5 darstellt und mit dem eine Kombination seitenkritischer und seitenunkritische Motivbestandteile auf beiden Seiten des Fensterbereichs 48 korrekt dargestellt werden kann. Figur 6(a) zeigt dabei einen Querschnitt des Sicherheitselements, Fig. 6(b) eine vereinfachte Aufsicht im Fensterbereich 48 des Substrats 40.

Bei dem Sicherheitselement 80 ist die erste Grunddruckfarbe 62 wieder im gesamten Merkmalsbereich 38 vorgesehen und im zweiten Druckbereich 34 mit der zweiten Druckfarbe 64 überdruckt. Der zweite Druckbereich 34 besteht im Ausführungsbeispiel aus einem seitenkritischen Motivbestandteil 34-K in Form der Ziffer "2" und einem seitenunkritischen Motivbestandteil 34-U in Form der Ziffer "0", so dass der zweite Druckbereich 34 insgesamt die Wertzahl "20" darstellt.

Auf der Rückseite des Substrats 40 ist im Fensterbereich 48 mit der Druckfarbe 64 ein Ergänzungsbereich 82 aufgedruckt, der von der Rückseite betrachtet, die Ziffer "2" darstellt und so zum Motivbestandteil 34-U ausgerichtet ist, dass die Bereiche 34-U und 82 von der Rückseite betrachtet zusammen ebenfalls die Wertzahl "20" bilden. In der in Fig. 6(b) dargestellten Vorderseitenaufsicht erscheint der gestichelt eingezeichnete Ergänzungsbereich 82 in Form der gespiegelten Ziffer "2".

Der Überdeckungsbereich 36 der Blocker-Druckfarbe 46 überdeckt wie bei Fig. 5 nur den ersten Druckbereich 32, er ist dabei insbesondere so angeordnet, dass er den Ergänzungsbereich 82 der Rückseite überdeckt. Darüber hinaus ist, wie bereits bei der Gestaltung der Fig. 5, auf der Rückseite des Substrats 40 unterhalb der seitenkritischen Motivbestandteile 34-K ein Bedeckbereich 76 aus Blocker-Druckfarbe 46 angeordnet.

Auf diese Weise wird bei Betrachtung der Vorderseite im UV-Licht durch die Blocker-Druckfarbe 46 des Überdeckungsbereichs 36 eine Anregung der Druckfarbe 64 des Ergänzungsbereichs 82 verhindert, so dass die Motivbestandteile 34-K, 34-U zusammen die Wertzahl "20" bilden, wobei die Farbwirkung durch die additive Farbmischung der Lumineszenzfarben der Druckfarben 62, 64 entsteht. Der Bedeckbereich 76 tritt bei Vorderseitenbetrachtung praktisch nicht in Erscheinung.

Bei Betrachtung der Rückseite im UV-Licht wird durch die Blocker-Druckfarbe 46 des Bedeckbereichs 76 eine Anregung des seitenkritischen Motivbestandteils 34-K verhindert. Der Ergänzungsbereich 82 bildet dann zusammen mit dem Motivbestandteil 34-U die Wertzahl "20", wobei auch hier die Farbwirkung durch die additive Farbmischung der Lumineszenzfarben der Druckfarben 62, 64 gegeben ist. Der Überdeckungsbereich 36 tritt bei Rückseitenbetrachtung praktisch nicht in Erscheinung.

Die mit dem Sicherheitselement 80 versehene Banknote zeigt daher im UV-Licht im Fensterbereich 48 überraschend auf beiden Seiten jeweils seitenrichtig die Wertzahl "20", obwohl der Betrachter intuitiv auf der Rückseite eine seitenverkehrte Ansicht erwarten würde. Ein solches Sicherheitselement weist daher einen hohen Wiedererkennungs- und Absicherungswert auf.

Die Blocker-Druckfarbe 46 kann bei den bisher beschrieben Ausführungsbeispiel insbesondere durch eine Druckfarbe auf Basis eines nanoskaligen UV-Blockers auf Basis von Titandioxid der Modifikation Rutil oder Tinuvin 400 gebildet sein. Mit beiden Modifikationen blockiert die Druckfarbe UV-Strahlung im kurz- und langwelligen UV-Bereich.

Mit Bezug auf das Sicherheitselement 90 der Fig. 7 ist es auch möglich, neben einer Blocker-Druckfarbe 46 auf Basis von Rutil oder Tinuvin zusätzlich eine weitere Blocker-Druckfarbe 92 einzusetzen, die ebenfalls im sichtbaren Spektralbereich transparent ist, aber nur einen Teil, beispielsweise den kurzwelligen Anteil des UV-Spektrums absorbiert. Die weitere Blocker-Druckfarbe 92 kann beispielsweise durch eine Druckfarbe auf Basis eines nanoskaligen UV-Blockers auf Basis von Titandioxid der Modifikation Anatas gebildet sein.

Bei Betrachtung unter Anregung mit langwelliger UV-Strahlung, beispielsweise einer Anregungswellenlänge von 365 nm, wirkt dann nur der Bereich mit der Blocker-Druckfarbe 46 blockierend, während bei Betrachtung unter Anregung mit kurzwelliger UV-Strahlung, beispielsweise einer Anregungswellenlänge von 254 nm, sowohl der Bereich mit der Blocker-Druckfarbe 46 als auch der Bereich mit der weiteren Blocker-Druckfarbe 92 blockierend wirken.

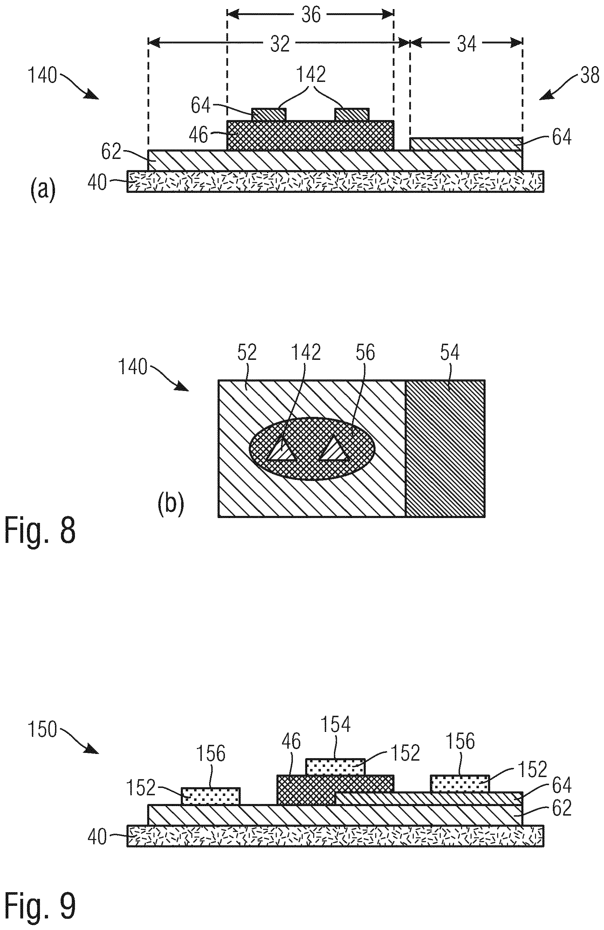

Figuren 8 bis 17 zeigen weitere Ausführungsbeispiele zur Illustration der Erfindung entsprechend den oben beschriebenen Prinzipien.

Das Sicherheitselement 140 der Fig. 8 stellt eine Abwandlung der Ausgestaltung der Fig. 3 mit einem weiteren Motivbereich dar. Fig. 8(a) zeigt dabei einen Querschnitt des Sicherheitselements, Fig. 8(b) das Erscheinungsbild des Sicherheitselements bei Betrachtung im UV-Licht in Aufsicht.

Im Merkmalsbereich 38 ist zunächst wie bei Fig. 3 eine erste Grunddruckfarbe 62 aufgebracht und in einem Teilbereich mit der zweiten Druckfarbe 64 überdruckt, wobei der von der zweiten Druckfarbe 64 überdruckte Teilbereich der Grunddruckfarbe den zweiten Druckbereich 34, und der nicht von der zweiten Druckfarbe 64 überdruckte Teilbereich den ersten Druckbereich 32 bildet. Im Unterschied zur Ausgestaltung der Fig. 3 überlappt der durch die Blocker-Druckfarbe 46 gebildete Überdeckungsbereich 36 nur den ersten Druckbereich 32, nicht aber den zweiten Druckbereich 34. Zudem ist die zweite Druckfarbe 64 in einem weiteren Teilbereich 142 auf der Blocker-Druckfarbe 46 aufgebracht, so dass dort eine UV-Anregung der zweiten Druckfarbe erfolgen kann.

Im sichtbaren Spektralbereich zeigt die erste Grunddruckfarbe 62 die gewünschte sichtbare Farbe, beispielsweise Rot. Die zweite Druckfarbe 64 und die Blocker-Druckfarbe 46 sind transparent, so dass sich derselbe visuelle Eindruck wie bei Fig. 2(a) ergibt, bei dem der erste Druckbereich 32 und der zweite Druckbereich 34 einschließlich des Überdeckungsbereichs 36 mit einheitlicher Farbe erscheinen.

Bei Betrachtung des Sicherheitselements 140 unter UV-Licht werden die UV-Lumineszenzstoffe der Druckfarben 62, 64 in den nicht von der Blocker-Druckfarbe 46 überdeckten Bereichen zur Lumineszenz angeregt. Geht man von den bei Fig. 3 angegebenen Farbwirkungen aus, so bildet der außerhalb des Überdeckungsbereichs 36 liegende Teilbereich des ersten Druckbereichs 32 einen ersten, grün lumineszierenden Motivbereich 52, und der zweite Druckbereich 34 bildet einen zweiten, in der Mischfarbe Gelb lumineszierenden Motivbereich 54. Im Teilbereich 142 verhindert die Blocker-Druckfarbe 46 die UV-Anregung der Grundfarbe 62, nicht aber die UV-Anregung der Druckfarbe 64, so dass dieser Teilbereich einen rot lumineszierenden, weiteren Motivbereich bildet. Der nicht mit Druckfarbe 64 versehene Teilbereich der Blocker-Druckfarbe 46 bildet einen dunklen Motivbereich 56, der keine Lumineszenzemission zeigt.

Es versteht sich, dass die Variante der Fig. 8 beispielsweise auch über einem Fensterbereich 48 eines Substrats 40 aufgebracht werden kann, wie in Fig. 4 gezeigt.

Bei einer weiteren Abwandlung der Gestaltung der Fig. 3 werden unterschiedlich anregbare Lumineszenzstoffe und unterschiedliche Blocker-Druckfarben eingesetzt. Bei dem Sicherheitselement 150 der Fig. 9 enthält sowohl die Grunddruckfarbe 62 als auch die Druckfarbe 64 neben einem UV-anregbaren Lumineszenzstoff jeweils einen IR-anregbaren Lumineszenzstoff, beispielsweise ein Up-Converter-Pigment, das nach IR-Anregung im sichtbaren Licht emittiert.

Weiter ist neben einer ersten, UV-blockierenden Blocker-Druckfarbe 46 auch eine zweite, NIR-blockierende Blocker-Druckfarbe 152 vorgesehen, die im sichtbaren und im ultravioletten Spektralbereich transparent ist, und die einen IR-Blocker enthält, der IR-Anregungsstrahlung für die IR-anregbaren Lumineszenzstoffe blockiert. Die zweite Blocker-Druckfarbe 152 ist zumindest in einem Teilbereich 154 auf der ersten Blocker-Druckfarbe 46 angeordnet, kann optional aber auch in Teilbereichen 156 außerhalb der ersten Blocker-Druckfarbe auf der Grunddruckfarbe 62 oder der zweiten Druckfarbe 64 vorgesehen sein.

Im sichtbaren Spektralbereich und nach UV-Anregung zeigt das Sicherheitselement 150 dasselbe visuelle Erscheinungsbild wie die Ausgestaltung der Fig. 3, da die NIR-Blocker-Druckfarbe 152 im sichtbaren und im ultravioletten Spektralbereich transparent ist.

Ein anderes Erscheinungsbild ergibt sich bei Anregung des Sicherheitselements 150 mit IR-Anregungslicht, beispielsweise mittels einer NIR-Diode oder einem NIR-Laser. Durch die IR-Beleuchtung werden die IR-anregbaren Lumineszenzstoffe der Druckfarben 62, 64 zur Lumineszenz angeregt, soweit sie nicht von der zweiten Blocker-Druckfarbe 152 überdruckt sind. Da die zweite Blocker-Druckfarbe 152 mit dem Teilbereich 154 ein weiteres Motiv innerhalb des Sicherheitselements 150 bildet, werden der Wiedererkennungswert und die Fälschungssicherheit des Elements weiter erhöht. Um einen großen Unterschied im Erscheinungsbild zu erzeugen, können die IR-Lumineszenzfarben einen zu den UV-Lumineszenzfarben komplementären Farbenton aufweisen. Wie in Fig. 9 ebenfalls gezeigt, kann die zweite Blocker-Druckfarbe 152 auch in Bereichen 156 außerhalb der UV-Blocker-Druckfarbe 46 vorgesehen sein, so dass sich bei Beaufschlagung mit NIR-Strahlung weitere Motive zeigen, die bei UV-Anregung nicht erkennbar sind.

Es versteht sich, dass auch die Variante der Fig. 9 über einem Fensterbereich 48 eines Substrats 40 aufgebracht werden kann, wie in Fig. 4 gezeigt.

Figur 10 zeigt ein Sicherheitselement 100 nach einem Ausführungsbeispiel der Erfindung, das ähnlich wie das Ausführungsbeispiel der Fig. 2 aufgebaut ist, bei dem allerdings sowohl die Druckbereiche 32, 34, als auch der Überdeckungsbereich 36 in Motivform ausgebildet sind. Die Figur zeigt dabei in (a) schematisch eine Aufsicht und in (b) einen Querschnitt des Sicherheitselements 100.

Konkret ist der erste Druckbereich 32 durch eine erste Druckfarbe 42 gebildet, die eine bestimmte sichtbare Farbe aufweist und einen ersten UV-Lumineszenzstoff für eine erste Lumineszenzfarbe enthält. Diese erste Druckfarbe 42 ist in Form von Zeichen aufgebracht, die jeweils einen Teil des Schriftzugs "20 Taler Bank of Bavaria" bilden. Der zweite Druckbereich 34 ist durch eine zweite Druckfarbe 44 gebildet, die ebenfalls die genannte sichtbare Farbe aufweist und einen zweiten UV-Lumineszenzstoff für eine zweite, unterschiedliche Lumineszenzfarbe enthält. Die zweite Druckfarbe 44 ist ebenfalls in Form von Zeichen aufgebracht, nämlich dem jeweils restlichen Teil des Schriftzugs "20 Taler Bank of Bavaria".

Der Überdeckungsbereich 36 ist durch eine transparente, UV-Strahlung blockierende Blocker-Druckfarbe 46 gebildet, die in Form mehrerer Wappen aufgedruckt ist und die sowohl den ersten als auch den zweiten Druckbereich 32, 34 überlappt.

Ist beispielsweise die einheitliche sichtbare Farbe Blau, die erste Lumineszenzfarbe Grün und die zweite Lumineszenzfarbe Rot, so zeigt das Sicherheitselement 100 im sichtbaren Spektralbereich den Schriftzug "20 Taler Bank of Bavaria" mit einheitlicher blauer Farbe. Bei Betrachtung des Sicherheitselements 100 unter UV-Licht erscheint ein Teil des Schriftzugs mit grüner Lumineszenzfarbe (Bereiche der Druckfarbe 42) und ein Teil mit roter Lumineszenzfarbe (Bereiche der Druckfarbe 44), wobei allerdings die von den Wappen des Überdeckungsbereichs 36 überdeckten Teile des Schriftzugs jeweils dunkel bleiben.

Das Sicherheitselement 102 der Fig. 11 ist grundsätzlich wie das Sicherheitselement 100 der Fig. 10 aufgebaut, es enthält allerdings neben dem durch die Blocker-Druckfarbe 46 gebildeten Überdeckungsbereich 36, der oberhalb der ersten und/oder zweiten Druckfarbe 42, 44 angeordnet ist, auch einen durch die Blocker-Druckfarbe 46 gebildeten Bedeckbereich 106, der unterhalb der ersten und/oder zweiten Druckfarbe 42, 44 angeordnet ist und von zumindest einer dieser Druckfarben bedeckt wird. Der Überdeckungsbereich 36 und der Bedeckbereich 106 sind im Allgemeinen durch mehrere, nicht zusammenhängende Teilbereiche gebildet, von denen in der Figur der Übersichtlichkeit halber jeweils nur ein Teilbereich mit einem Bezugszeichen versehen ist.

Eine solche Gestaltung ist insbesondere für transparente oder transluzente Substrate 104 oder für Sicherheitselemente geeignet, in denen die Druckbereiche über einem transparenten Fensterbereich eines Substrats aufgebracht sind. Wie erwähnt, beziehen sich die Begriffe Überdeckungsbereich und Bedeckbereich auf eine ausgewählt Betrachtungsrichtung, in der Darstellung der Fig. 11 beispielsweise von oben, also der Vorderseite 104-V des Substrats 104, auf welcher die Druckfarben 42, 44, 46 aufgebracht sind. Stellt man auf eine Betrachtung des Sicherheitselements 102 von unten, also von der gegenüberliegenden Rückseite 104-R des Substrats her ab, so kann der Bereich 106 als Überdeckungsbereich und der Bereich 36 als Bedeckbereich angesehen werden. Der strukturelle Aufbau des Sicherheitselements ändert sich durch einen Wechsel der Betrachtungsrichtung nicht, lediglich die Bereiche 36, 106 tauschen ihre Bezeichnungen.

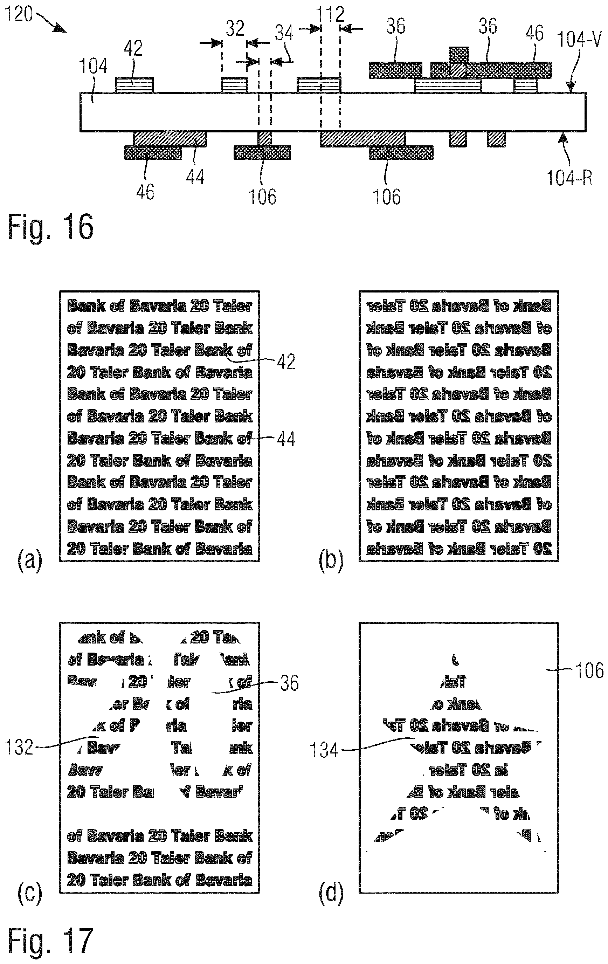

Durch eine unterschiedliche Ausbildung des Überdeckungsbereichs 36 und des Bedeckbereichs 106 in Form und/oder Größe können unterschiedliche Erscheinungsbilder der Druckbereiche 32, 34 bei Betrachtung von der Vorderseite und der Rückseite erzeugt werden, wie weiter unten anhand der Fig. 17 genauer illustriert.

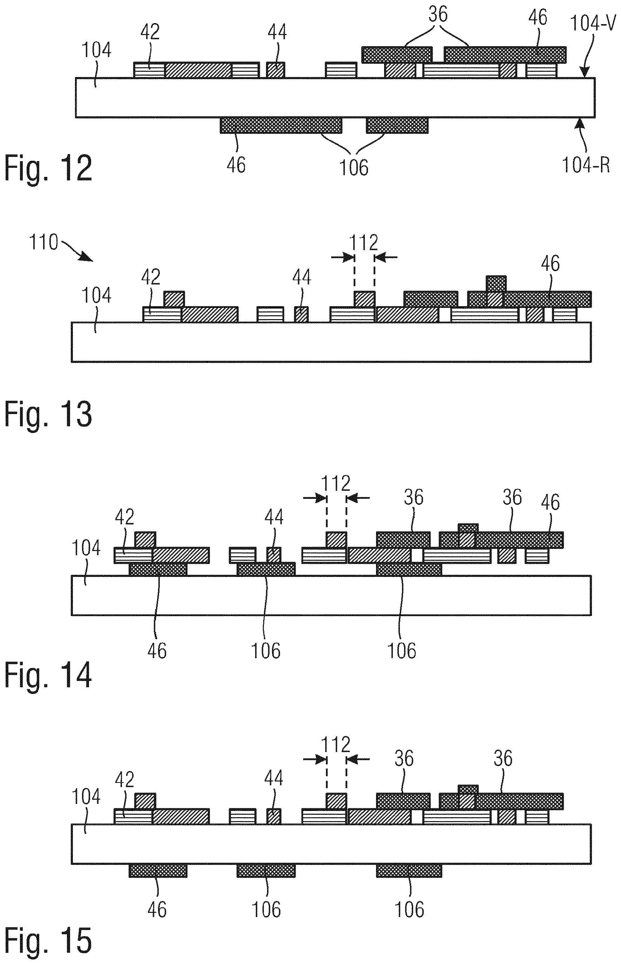

Bei der Gestaltung der Fig. 11 sind alle Druckfarben, einschließlich der Blocker-Druckfarbe 46 des Überdeckungsbereichs 36 und der Blocker-Druckfarbe 46 des Bedeckbereichs 106 auf derselben Seite des Substrats 104 angeordnet. Figur 12 zeigt eine Abwandlung der Ausgestaltung der Fig. 11, bei der die Druckfarben 42, 44 des ersten und zweiten Druckbereichs, sowie die Blocker-Druckfarbe 46 des Überdeckungsbereichs 36 auf der Vorderseite 104-V des Substrats angeordnet sind, während die Blocker-Druckfarbe 46 des Bedeckbereichs 106 auf der gegenüberliegenden Rückseite 104-R des Substrats 104 aufgebracht ist.

Bei der Weiterbildung des Sicherheitselements 110 der Fig. 13 können die beiden Druckfarben 42, 44 auch bereichsweise übereinander angeordnet sein, so dass dort durch additive Farbmischung der Lumineszenzfarben ein weiterer Motivbereich 112 entsteht. Da die beiden Druckfarben 42, 44 dieselbe sichtbare Farbe aufweisen, ergibt sich im sichtbaren Spektralbereich durch die Übereinanderanordnung keine Änderung des Erscheinungsbilds, alle Motivbereiche erscheinen mit derselben sichtbaren Farbe, beispielsweise Blau.

Bei Betrachtung des Sicherheitselements 110 unter UV-Licht erscheint der Druckbereich 32, der nur die Druckfarbe 42, nicht aber die Druckfarbe 44 aufweist, mit einer ersten Lumineszenzfarbe, beispielsweise Grün, der Druckbereich 34, der nur die Druckfarbe 44, nicht aber die Druckfarbe 42 aufweist, mit der zweite Lumineszenzfarbe, beispielsweise Rot, und der weitere Motivbereich 112, in dem die beiden Druckfarben 42, 44 übereinander angeordnet sind, mit der additiven Mischfarbe der beiden Lumineszenzfarben, vorliegend also Grün + Rot = Gelb. Diese drei Lumineszenzfarben treten, wie bei den zuvor beschriebenen Ausgestaltungen, jeweils nur in den nicht von der Blocker-Druckfarbe 46 überdeckten Bereichen in Erscheinung.

Die Figuren 14 und 15 illustrieren, dass die Weiterbildung der Fig. 13 neben einem Überdeckungsbereich 36 auch einen Bedeckbereich 106 aufweisen kann. Figur 14 zeigt dabei eine der Gestaltung der Fig. 11 entsprechende Variante, bei der der Überdeckungsbereich 36 und der Bedeckbereich 106 auf derselben Seite des Substrats vorliegen wie die Druckfarben 42, 44. Der Überdeckungsbereich 36 ist oberhalb und der Bedeckbereich 106 unterhalb der Druckfarben 42, 44 angeordnet, so dass der Überdeckungsbereich 36 die UV-Anregungsstrahlung bei Vorderseitenbetrachtung und der Bedeckbereich 106 die UV-Anregungsstrahlung bei Rückseitenbetrachtung blockiert.

Figur 15 illustriert eine der Gestaltung der Fig.12 entsprechende Variante, bei der der Überdeckungsbereich 36 auf derselben Seite des Substrats 104 angeordnet ist wie die Druckfarben 42, 44, und der Bedeckbereich 106 auf der gegenüberliegenden Seite des Substrats 104 angeordnet ist.

Figur 16 zeigt ein Sicherheitselement 120 nach einem weiteren Ausführungsbeispiel der Erfindung, bei dem die erste Druckfarbe 42 auf der Vorderseite 104-V und die zweite Druckfarbe 44 auf der Rückseite 104-R des Substrats aufgebracht ist. Das Substrat 104 ist dabei zumindest im Bereich der Druckfarben 42, 44 transparent oder transluzent ausgebildet und stellt einen Bestandteil des Sicherheitselements dar.

Das gezeigte Ausführungsbeispiel weist wie die Gestaltungen der Figuren 13 bis 15 erste und zweite Druckbereiche 32, 34 und einen weiteren Motivbereich 112 auf, wobei im ersten Druckbereich 32 nur die Druckfarbe 42 vorliegt, im zweiten Druckbereich 34 nur die Druckfarbe 44 vorliegt und im weiteren Motivbereich 112 die Druckfarben 42, 44 auf unterschiedlichen Substratseiten übereinander angeordnet vorliegen. Es versteht sich, dass die Druckfarben 42, 44 auch ohne gegenseitige Überlappung angeordnet sein können, so dass kein zusätzlicher Motivbereich 112 entsteht.

Die Blocker-Druckfarbe 46 ist in einem Überdeckungsbereich 36 auf der Vorderseite 104-V des Substrats oberhalb der ersten Druckfarbe 42, und in einem Bedeckbereich 106 auf der Rückseite 104-R unterhalb der zweiten Druckfarbe 44 aufgebracht, so dass sich ausgehend vom Substrat 104 jeweils die Schichtenfolge Substrat/ erste bzw. zweite Druckfarbe/Blocker-Druckfarbe ergibt.

Figur 17 illustriert das Erscheinungsbild eines von gegenüberliegenden Seiten betrachtbaren Sicherheitselements 130 mit Überdeckungsbereich 36 und Bedeckbereich 106, beispielsweise eines der Sicherheitselemente der Figuren 11, 12 oder 14 bis 16.

Das Sicherheitselement 130 ist mit seinem Merkmalbereich in einem Fensterbereich eines Wertdokuments, beispielsweise einer Banknote aufgebracht. Figur 17(a) zeigt das Erscheinungsbild des Sicherheitselements 130 im sichtbaren Licht bei Vorderseitenbetrachtung, Fig. 17(b) das Erscheinungsbild im sichtbaren Licht bei Rückseitenbetrachtung, Fig. 17(c) das Erscheinungsbild unter UV-Licht bei Vorderseitenbetrachtung und Fig. 17(d) das Erscheinungsbild unter UV-Licht bei Rückseitenbetrachtung.

Der erste und zweite Druckbereich sind im Sicherheitselement 130 wie bei der Ausgestaltung der Fig. 10 durch Druckfarben 42 bzw. 44 gebildet, die jeweils in Form eines Teils des Schriftzugs "20 Taler Bank of Bavaria" aufgebracht sind. Der Überdeckungsbereich 36 ist durch einen Druckbereich mit einer Aussparung 132 in Form der Wertzahl "20" gebildet, welcher aus Sicht der Vorderseitenbetrachtung über den Druckfarben 42, 44 angeordnet ist. Der Bedeckbereich 106 ist durch einen Druckbereich mit einer sternförmigen Aussparung 134 gebildet, welcher aus Sicht der Vorderseitenbetrachtung unter den Druckfarben 42, 44 angeordnet ist.

Ist beispielsweise die einheitliche sichtbare Farbe Blau, die erste Lumineszenzfarbe Grün und die zweite Lumineszenzfarbe Rot, so zeigt das Sicherheitselement im sichtbaren Spektralbereich sowohl bei Vorderseitenbetrachtung (Fig. 17(a)) als auch bei Rückseitenbetrachtung (Fig. 17(b)) den einheitlichen, blauen Schriftzug "20 Taler Bank of Bavaria".

Bei Betrachtung des Sicherheitselements 100 unter UV-Licht erscheint bei Vorderseitenbetrachtung (Fig. 17(c)) ein Teil des Schriftzugs mit grüner Lumineszenzfarbe (Bereiche der Druckfarbe 42) und ein Teil mit roter Lumineszenzfarbe (Bereiche der Druckfarbe 44), wobei dieses Erscheinungsbild nur in der wertzahlförmigen Aussparung 132 des Überdeckungsbereichs 36, sowie außerhalb des Überdeckungsbereichs 36 sichtbar ist. Im Überdeckungsbereich 36 selbst wird die von der Vorderseite her einfallende UV-Anregungsstrahlung blockiert, so dass dort keine Lumineszenz auftritt.

Bei Rückseitenbetrachtung unter UV-Licht (Fig. 17(d)) erscheint ebenfalls ein Teil des Schriftzugs mit grüner Lumineszenzfarbe (Bereiche der Druckfarbe 42) und ein Teil mit roter Lumineszenzfarbe (Bereiche der Druckfarbe 44), wobei dieses Erscheinungsbild von der Rückseite her nur in der sternförmigen Aussparung 134 des Bedeckbereichs 106 sichtbar ist. Im Bedeckbereich 106 selbst wird die von der Rückseite her einfallende UV-Anregungsstrahlung blockiert, so dass dort keine Lumineszenz auftritt.

Die Ausführungsbeispiele wurden jeweils mit Bezug auf UV-Licht als Anregungsstrahlung beschrieben, es versteht sich allerdings, dass in gleicher Weise auch Lumineszenzstoffe eingesetzt werden können, die durch IR-Licht zur Lumineszenz anregbar sind. Die Blocker-Druckfarbe enthält dann beispielsweise einen NIR-Absorber, um eine Anregung der Lumineszenzstoffe zu blockieren.

### Bezugszeichenliste

- 10: Papierbanknote
- 11: Druckelemente
- 12: Wasserzeichen
- 13: Banknotenpapier
- 14: Fenstersicherheitsfaden
- 15: Folienstreifen
- 16: durchgehende Öffnung
- 17: Lumineszenz-Druckelement
- 20: Polymerbanknote
- 21: Druckelemente
- 22,23: Fensterbereiche
- 24: Polymersubstrat
- 25: Lumineszenz-Druckelement
- 30: Sicherheitselement
- 32: erster Druckbereich
- 34: zweiter Druckbereich
- 34-K: seitenkritische Motivbestandteile
- 34-U: seitenunkritische Motivbestandteile
- 36: Überdeckungsbereich
- 38: Merkmalsbereich
- 40: Substrat
- 42: erste Druckfarbe
- 44: zweite Druckfarbe
- 46: Blocker-Druckfarbe
- 48: Fensterbereich
- 52, 54, 56: Motivbereiche
- 60: Sicherheitselement
- 62: Grunddruckfarbe
- 64: zweiten Druckfarbe
- 70: Sicherheitselement
- 72: Teilbereich
- 76: Bedeckbereich
- 80: Sicherheitselement
- 82: Ergänzungsbereich
- 90: Sicherheitselement
- 92: weitere Blocker-Druckfarbe
- 100: Sicherheitselement
- 102: Sicherheitselement
- 104: transparentes oder transluzentes Substrat
- 104-V: Vorderseite
- 104-R: Rückseite
- 106: Bedeckbereich
- 110: Sicherheitselement
- 112: weiterer Motivbereich
- 120: Sicherheitselement
- 130: Sicherheitselement
- 132: wertzahlförmige Aussparung
- 134: sternförmige Aussparung
- 140: Sicherheitselement
- 142: Teilbereich
- 150: Sicherheitselement
- 152: NIR-blockierende Blocker-Druckfarbe
- 154, 156: Teilbereiche mit NIR-Blocker-Druckfarbe

## Patentansprüche

1. Sicherheitselement zur Absicherung von Wertgegenständen, mit einem Merkmalsbereich mit einem Lumineszenzmerkmal, bei dem
- der Merkmalsbereich zumindest drei Motivbereiche aufweist, die im sichtbaren Spektralbereich in Aufsicht dieselbe sichtbare Farbe zeigen, und von denen bei Anregung des Merkmalsbereichs mit UV- und/oder IR-Anregungslicht in Aufsicht ein erster Motivbereich in einer ersten Lumineszenzfarbe luminesziert, ein zweiter Motivbereich in einer zweiten, unterschiedlichen Lumineszenzfarbe luminesziert, und ein dritter Motivbereich keine Lumineszenzemission zeigt,
- der Merkmalsbereich einen ersten Druckbereich mit der genannten sichtbaren Farbe und mit zumindest einem Lumineszenzstoff für die erste Lumineszenzfarbe enthält, und einen zweiten Druckbereich mit der genannten sichtbaren Farbe und zumindest einem Lumineszenzstoff für die zweite Lumineszenzfarbe enthält, und
- im Merkmalsbereich in einem den ersten und/oder zweiten Druckbereich überlappenden Überdeckungsbereich eine Blocker-Druckfarbe aufgebracht ist, die im sichtbaren Spektralbereich nicht sichtbar ist und das UV- und/oder IR-Anregungslicht blockiert,
- wobei der nicht von der Blocker-Druckfarbe überdeckte Teilbereich des ersten Druckbereichs den ersten Motivbereich mit der ersten Lumineszenzfarbe, der nicht von der Blocker-Druckfarbe überdeckte Teilbereich des zweiten Druckbereichs den zweiten Motivbereich mit der zweiten Lumineszenzfarbe, und der Überdeckungsbereich den dritten Motivbereich ohne Lumineszenzemission umfasst.

2. Sicherheitselement nach Anspruch 1, **dadurch gekennzeichnet, dass** der erste Druckbereich durch eine erste Druckfarbe mit der genannten sichtbaren Farbe und mit zumindest einem Lumineszenzstoff für die erste Lumineszenzfarbe gebildet ist, und der zweite Druckbereich durch eine zweite Druckfarbe mit der genannten sichtbaren Farbe und mit zumindest einem Lumineszenzstoff für die zweite Lumineszenzfarbe gebildet ist.

3. Sicherheitselement nach Anspruch 2, **dadurch gekennzeichnet, dass** die erste und zweite Druckfarbe in einem Teilbereich überlappen und dort einen weiteren Motivbereich bilden, der bei Anregung des Merkmalsbereichs mit UV- und/oder IR-Anregungslicht in einer Lumineszenzfarbe luminesziert, die durch Farbmischung der ersten und zweiten Lumineszenzfarbe erzeugt ist.

4. Sicherheitselement nach Anspruch 2, **dadurch gekennzeichnet, dass**
- der erste Druckbereich durch die erste Druckfarbe mit der genannten sichtbaren Farbe und mit zumindest einem langwellig UV-anregbaren Lumineszenzstoff gebildet ist,
- der zweite Druckbereich durch die zweite Druckfarbe gebildet ist, die eine deckende Farbe enthält, die im sichtbaren Spektralbereich denselben Farbton wie die sichtbare Farbe des ersten Druckbereichs aufweist und die einen von dem Lumineszenzstoff des ersten Druckbereichs unterschiedlichen Lumineszenzstoff enthält, und
- in einem Überlappungsbereich der ersten und zweiten Druckfarbe die deckende Farbe der zweiten Druckfarbe die sichtbare Farbe der ersten Druckfarbe zumindest teilweise abdeckt, wobei
- die deckende Farbe der zweiten Druckfarbe ein Titandioxid der Modifikation Anatas enthält oder aus dieser Modifikation besteht und dadurch im langwelligen UV-Bereich nicht absorbiert und so eine UV-Anregung der ersten Druckfarbe im ersten Druckbereich erlaubt.

5. Sicherheitselement nach Anspruch 1, **dadurch gekennzeichnet, dass** zumindest ein Druckbereich durch eine Druckfarbe mit der genannten sichtbaren Farbe und einem ersten Lumineszenzstoff, sowie eine transparente Druckfarbe mit einem zweiten Lumineszenzstoff gebildet ist, wobei der erste und zweite Lumineszenzstoff durch Farbmischung, insbesondere additive Farbmischung, die Lumineszenzfarbe des Druckbereichs erzeugen.

6. Sicherheitselement nach Anspruch 1, **dadurch gekennzeichnet, dass** der erste und zweite Druckbereich eine gemeinsame Grunddruckfarbe mit der genannten sichtbaren Farbe und einem ersten Lumineszenzstoff für die erste Lumineszenzfarbe enthalten, und der zweite Druckbereich zusätzlich eine transparente Druckfarbe mit einem zweiten Lumineszenzstoff enthält, der zusammen mit dem ersten Lumineszenzstoff durch Farbmischung, insbesondere additive Farbmischung, die zweite Lumineszenzfarbe erzeugt, während der erste Druckbereich keine solche zusätzliche transparente Druckfarbe aufweist.

7. Sicherheitselement nach wenigstens einem der Ansprüche 1 bis 6, **dadurch gekennzeichnet, dass** der erste und/oder zweite Druckbereich in Motivform, insbesondere als Zeichen, Muster oder Codierungen ausgebildet ist,

8. Sicherheitselement nach wenigstens einem der Ansprüche 1 bis 7, **dadurch gekennzeichnet, dass** der erste und zweite Druckbereich aufeinander bezogene oder einander ergänzende Informationen darstellen.

9. Sicherheitselement nach wenigstens einem der Ansprüche 1 bis 8, **dadurch gekennzeichnet, dass** der erste und zweite Druckbereich registriert zueinander angeordnet sind, insbesondere zumindest in Teilbereichen ohne Zwischenraum unmittelbar aneinander angrenzend angeordnet sind.

10. Sicherheitselement nach wenigstens einem der Ansprüche 1 bis 9, **dadurch gekennzeichnet, dass** das Sicherheitselement auf Betrachtung von gegenüberliegenden Seiten her ausgelegt ist und neben dem Überdeckungsbereich, der das UV- und/oder IR-Anregungslicht bei Einfall von einer ersten Seite blockiert, zusätzlich einen den ersten und/oder zweiten Druckbereich überlappenden Bedeckbereich aufweist, der das UV- und/oder IR-Anregungslicht bei Einfall von einer gegenüberliegenden zweiten Seite blockiert.

11. Sicherheitselement nach Anspruch 10, **dadurch gekennzeichnet, dass** der Überdeckungsbereich und der Bedeckbereich mit unterschiedlicher Form und/oder Größe ausgebildet sind, so dass das Sicherheitselement bei Betrachtung von gegenüberliegenden Seiten unterschiedliche Erscheinungsbilder aufweist.

12. Sicherheitselement nach Anspruch 10 oder 11, **dadurch gekennzeichnet, dass** der erste und zweite Druckbereich zwischen dem Überdeckungsbereich und dem Bedeckbereich angeordnet sind.

13. Sicherheitselement nach einem der Ansprüche 10 bis 12, **dadurch gekennzeichnet, dass** der Bedeckbereich zumindest mit einem Teilbereich unterhalb von seitenkritischen Motivbestandteilen des ersten und/oder zweiten Druckbereichs angeordnet ist.

14. Sicherheitselement nach wenigstens einem der Ansprüche 1 bis 13, **dadurch gekennzeichnet, dass** der Überdeckungsbereich und/oder der Bedeckbereich in Motivform, insbesondere als Zeichen, Muster oder Codierungen ausgebildet sind.

15. Sicherheitselement nach wenigstens einem der Ansprüche 1 bis 14, **dadurch gekennzeichnet, dass** das Sicherheitselement ein Substrat aufweist, das zumindest in einem Teilbereich des Merkmalsbereichs transparent oder transluzent ist.

16. Sicherheitselement nach Anspruch 10 und 15, **dadurch gekennzeichnet, dass** der Überdeckungsbereich und der Bedeckbereich auf gegenüberliegenden Seiten des Substrats angeordnet sind.

17. Sicherheitselement nach wenigstens einem der Ansprüche 1 bis 13, **dadurch gekennzeichnet, dass** die Blocker-Druckfarbe einen nanoskaligen UV-Blocker auf Basis von Titandioxid der Modifikation Rutil oder Tinuvin 400 und/oder einen nanoskaligen UV-Blocker auf Basis von Titandioxid der Modifikation Anatas enthält.

18. Datenträger mit einem Sicherheitselement nach einem der Ansprüche 1 bis 17, wobei der Datenträger insbesondere ein Wertdokument oder eine Ausweiskarte ist.
